# EUROPEAN PATENT SPECIFICATION

(11) **EP 3 224 736 B1**
(45) Date of publication and mention of the grant of the patent: **13.04.2022**
(21) Application number: 14808572.3
(22) Date of filing: 28.11.2014
(51) Int. Cl.: G06F 40/109, G06F 3/12

(54) **LABEL PRINTER**
ETIKETTENDRUCKER
IMPRIMANTE D'ÉTIQUETTE

(43) Date of publication of application: 04.10.2017
(73) Proprietor: Sato Holdings Kabushiki Kaisha, Tokyo 153-0064 (JP)
(72) Inventor: ÅKESSON, Anders, S-41263 Göteborg (SE); WIBECK, Magnus, S-41263 Göteborg (SE)
(74) Representative: Grünecker Patent- und Rechtsanwälte PartG mbB
(86) International application number: PCT/EP2014/075966
(87) International publication number: WO 2016/082890

(56) References cited:
- JP-A- 2002 254 719

## Description

### FIELD OF THE INVENTION

The present invention generally relates to label printers. More specifically, the present invention relates to label printers that are specifically adapted for printing labels including lists of text.

### BACKGROUND ART

Label printers, i.e. small, often portable printing devices specifically designed for printing on strip-like material such as paper strips are generally known in the art.

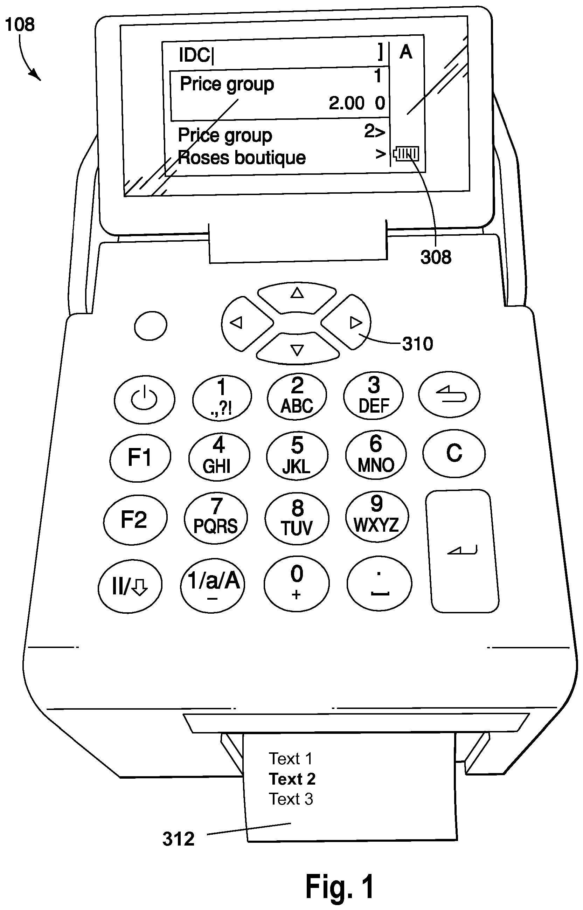

An exemplary label printer is shown in Fig. 1. It should be noted that there are two kinds of label printers: Firstly, label printers operating as stand-alone units, without requiring a computer to be physically attached for operation, and, secondly, label printers which require a physical connection to a computer for providing printing-related functionality. For instance, a computer may be physically connected to a printer for providing firmware, software applications and data for the printer.

On the other hand, a printer operable as a stand-alone unit may be configured with memory, an input device such as a keyboard, and an output device such as a display screen, for information to be provided from and to operators.

Fig. 1 illustrates a printing device (label printer) 108 including inter alia a user interface comprising a small display screen 308 as well as a simplified keyboard 310 for providing some user input for operation. Further, a paper strip 312 is shown as a material out of which labels can be made. The present invention is applicable to both media comprising liners, i.e. some bearing material to which the individual labels are attached in a removable manner, and liner-less media comprising a single strip of paper or another suitable material that can be individually divided into plural labels after printing.

Generally, label printers are capable of printing a variety of contents, including not only text but inter alia also graphics or barcodes. Some label printers are moreover capable of including printed circuits such as RFID (Radio Frequency Identification) tags into a label and encoding same during the printing process.

In order to perform printing with a printer such as a label printer, it is necessary to encode the set of characters to be printed numerically. A numerical space for encoding characters to be printed is called code space. Any single one of the numerical values that make up the code space is called a code point or code position. In other words, each code point corresponds to a particular character including not only characters to be actually printed but also a plurality of abstract characters such as spaces or non-printed characters having designated functions such as line wrapping.

Well known character and coding schemes are, for instance, ASCII (American Standard Code for Information Interchange) and Unicode (an international standard developed by the Unicode Consortium). The code space of ASCII comprises 128 code points corresponding to decimal numbers 0 to 127 (hexadecimal: 0 to 7F). The code space of Unicode comprises decimal numbers from 0 to 1,114,411 (hexadecimal: 0 to 10FFFF). For instance, in both code spaces of ASCII and Unicode, the character A has the decimal code point 65 (hexadecimal: 41).

However, an (abstract) character encoded in a code space must only encode the meaning of a particular character in a set of characters to be printed (such as, for instance, the Latin alphabet, together with numerical characters from 0 to 9 and grammatical characters such as full stop, colon, question mark etc.).However, the code space does not define how the respective printed character actually looks. Namely, a plurality of different possibilities exist for printing one and the same character (character set), wherein the different appearance of one and the same character is defined by employing different glyphs, the glyph being the particular graphical representation of an abstract character. For this purpose, a printer (or a computer connected to a printer and controlling the printer) employs font files. Font files include particular glyphs that are associated with each of the abstract characters. For this purpose, a font file generally associates a particular glyph to be printed with the code point of the respective abstract character in the code space employed. Different kinds of fonts corresponding to different font files include such different fonts as, for instance, Arial, Courier, Times New Roman etc but also, within each of such kinds, for instance, fonts having different sizes or fonts to be printed in bold or in italics.

Printing on labels in a label printer is normally based on some command language which designates, inter alia, the particular font file used for printing in a text field of a label (such as a single line or a text box consisting of several automatically line-wrapped lines). Alternatively, printing could be performed without predefining fonts in font files, which would, however, involve applying rendering firmware each time before printing, in order to newly generate the respective font. This is, however, time and processing load consuming and is therefore generally avoided in small autonomous printing devices such as label printers.

On the other hand, there are applications where it is beneficial and/or even mandatory to mark certain words printed on the label with a different font.

It is therefore a drawback of conventional label printers that a single text field can only contain one single font, which has to be defined in advance of printing in the text field by a respective command. The reason is that commands of command languages used in label printers, such as Sato Barcode Program Language (SBPL) allow only a single font per command, i.e. per text field.

Therefore, in order to print certain words in a different font, it would be necessary to subdivide the text into separate text fields for each word, and then once again define the font to be applied for each words separately, although, possible, there is only a single one among tens or hundreds of words to be printed in a different font. This therefore consumes a lot of time and processing power and may moreover negatively affect the layout of the label since features such as automatic line wrapping in predefined text fields may not be possible.

A particular example wherein it is desired to mark certain words with a different font is in the area of food labeling. Since some ingredients in foodstuffs can cause allergic reactions, it is beneficial to mark such ingredients by printing them in a different font. More specifically, in the European Union, certain directives will come into effect during 2014, according to which it will be mandatory to mark those ingredients that may cause allergic reactions with a particular font, such as bold, italic or underlined. It may be expected that similar regulations will come into force in other jurisdictions in the future, as well.

Japanese patent application 2002/254719 A describes a label printer that is capable of printing input text on a label using different fonts. A ROM has memorized two or more kinds of font data of each character (i.e. for the same character code). A look-up table is provided for determining whether a text portion has to be printed in an alternative font.

### SUMMARY OF THE INVENTION

The present invention therefore aims to provide an improved label printer that can employ different fonts in a single text field without requiring any changes to hardware, software or rendering firmware of the printer, and a respective printing method.

This is achieved by the features of the independent claims.

Further features and advantages of the present invention are set forth in dependent claims.

### BRIEF DESCRIPTION OF THE DRAWINGS

Additional features and advantages of the present invention will become apparent in the following and more particular description as illustrated in the accompanying drawings, wherein:
Fig. 1 illustrates an exemplary view of a label printer, to which the present invention is applicable;
Fig. 2 illustrates a possible output text formatting on a label printed in accordance with the present invention;
Fig. 3 illustrates the principle of having glyphs for different font types in a single font file, in accordance with an embodiment of the present invention;
Fig. 4 illustrates a specific text table and a method for discriminating text portions based thereon in accordance with an embodiment of the present invention;
Fig. 5 illustrates an example wherein a text portion to be printed with an alternative font type has been marked in the input text in advance; and
Fig. 6 is a flow chart illustrating a method in accordance with an embodiment of the present invention.

### DETAILED DESCRIPTION

The present invention provides a label printer capable of employing multiple fonts in a single text field such as a single line or a text box consisting of several automatically line-wrapped lines. In particular, such a label printer, employed in the field of food labels showing ingredients, can be applied to comply with legal provisions concerning allergy indication, such as a respective provision under European Union law that will come into effect during 2014. However, the label printer in accordance with the present invention is not limited to the above identified field of application, but can equally be used in any situation wherein printing of text employing different types of fonts is required in a text field on a label.

For achieving the possibility of employing multiple fonts in a single text field, the present invention employs a single font file that has glyphs for both standard and alternative fonts, i.e. two kinds of font types.

In the following, a detailed description will be given with reference to the figures of the drawings.

As already indicated above, Fig. 1 illustrates an overall view of an exemplary label printer, which may implement the present invention. In accordance with a preferred embodiment, label printer 108 of Fig. 1 is a stand-alone printer.

However, the single font file including both standard and alternative fonts for implementing the present invention can also be provided on a computer for controlling a printer connected thereto. For this purpose, the computer can be provided with a single font file including glyphs for fonts of at least two different font types, for instance, by means of a computer readable medium having recorded thereon a font file including glyphs for fonts of at least two different font types.

On the label 312 illustrated in Fig. 1, a text field including a list has been printed that has been illustrated by three lines reading "Text 1", "Text 2", "Text 3". Out of these, the middle one, "Text 2", has been printed in bold, which can be advantageously achieved by the present invention in a simple manner.

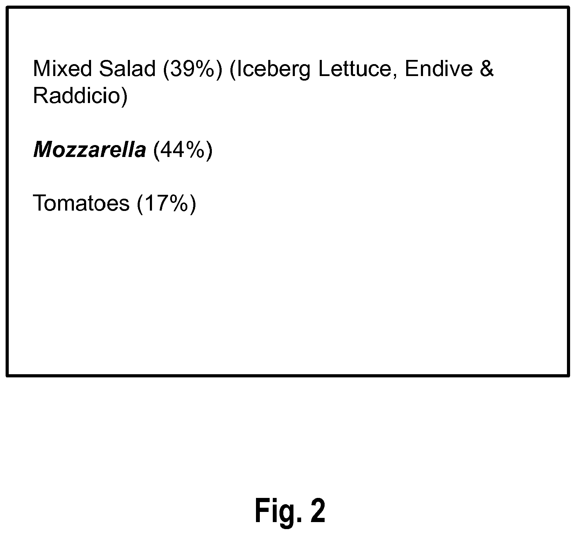

Fig. 2 illustrates an exemplary label having text printed thereon in accordance with the present invention.

Specifically, Fig. 2 shows a label having a list printed thereon of several ingredients from an article of food. Out of the ingredients listed on the label, "Mozzarella" has been printed using a font which is both bold and in italics. Said font is different from the font in which the rest of the ingredients on the label of Fig. 2 have been printed.

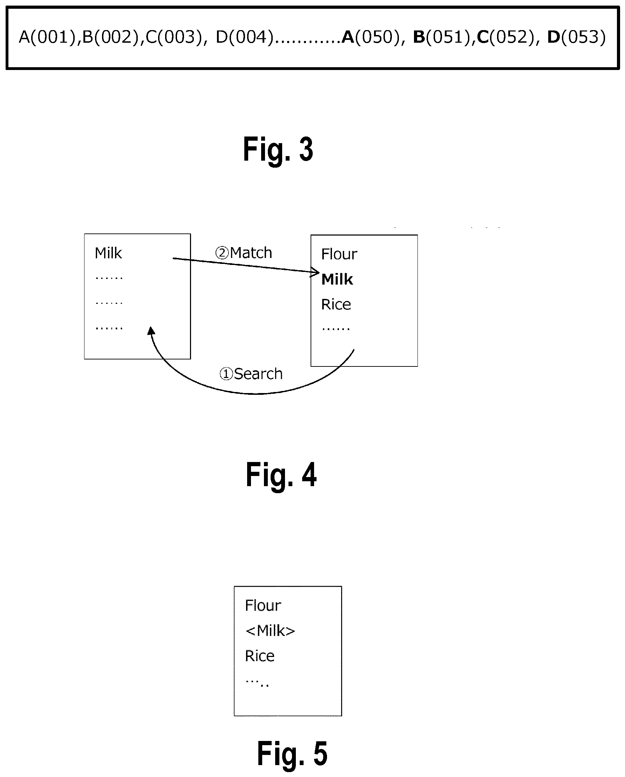

Fig. 3 provides a simplified example of a structure of a font file in accordance with an embodiment of the present invention. The font file lists glyphs corresponding to different characters of a first font type (for instance: a standard font type) in association with respective glyph code point numbers. For simplification, in the present case, only the first four glyphs corresponding to characters A, B, C and D are illustrated. The corresponding glyph code points are (001), (002), (003) and (004), respectively.

It has to be noted that the example shown in Fig. 3 is only a simplified example for illustration purposes and does not correspond, for instance, to the standard code spaces such as ASCII or Unicode wherein, as indicated above, character A corresponds to code point number 65.

Fig. 3 further illustrates that the font file also includes glyphs for the same characters printed in bold. The respective glyphs have been included into the font file in association with glyph code points that are obtained from the respective glyph code point of the standard font by adding a fixed number, which is 49 in the given example. Consequently, the bold fonts for characters A, B, C, and D correspond to code points (050), (051), (052), and (053), respectively. Hence, text portions to be printed using the bold (alternative) font can be printed by adding the number of 49 to their respective characters, thus identifying the correct glyphs from the font file for printing.

In other words, the present invention utilizes a non-standard encoding in the font file. In contrast to conventional font files, including only a single font each, according to the present invention a single font file contains glyphs for both a standard font and alternative font (or even a plurality of alternative fonts). The coding for the alternative glyph is such that it is easy to convert a standard glyph code point (or other kind of font address or font index) to an alternative glyph code point (font address or font index), for instance, by adding a fixed number to the standard glyph code point (font address or font index). It has to be specifically noted that the fixed number must be sufficiently large to ensure that there is no overlap between the range of code points designating glyphs of the standard font, and the range of code points designating glyphs of the alternative font(s).

For instance, in the example of Fig. 3, the overall number of characters in the set of characters must be less than 50. If there were more than 50 different characters, an offset number larger than 49 should be used in order to prevent overlap.

In the framework of the present invention, a further problem arises concerning how to identify a text portion, such as a word (for instance, designating an allergy item), a group of words or a single character that has to be printed in an alternative font.

Several methods are possible.

In accordance with a first method, the respective text portions can be found by referring to a look-up table (specific text table). Such a method has the advantage that it does not require any change to the existing label data. However, processing input text by means of such a look-up table can require a considerable amount of time. For instance, the number of allergy items in a table of food ingredients may amount to about 12,000 items.

Alternatively, according to a second method, in the input text data itself, the text portions that need to be printed using alternative fonts are marked in advance. The respective processing speed can be higher than in the first method since there is no need to refer to a look-up table. However, in accordance with the second method, it is necessary to perform some changes in the input text data in advance.

The processing for discriminating text to be printed using a standard and an alternative font in accordance with the first method using a look-up table is illustrated in Fig. 4. The right-hand side of Fig. 4 shows a list of ingredients which serve as an input text for a label printer and which include, *inter alia,* the words "Flour", "Milk" and "Rice". The left-hand side of Fig. 4 shows a look-up table, including a list of ingredients that may cause allergic reactions. In the present example, the look-up table includes, *inter alia,* the word "Milk".

In a first processing step, for each word of the input text a search is performed as to whether the respective word is included in the look-up table. Although in the illustrated example, a text portion to be discriminated corresponds to a single word, the present invention is not limited to this. Other text portions, such as groups of words taken as a whole can be included in the specific text table, as well. In the second step, it is determined whether a match between a word (a text portion) of the input text and a word (text portion) listed in the look-up table exists. In the present case, a match is identified for the term "Milk". Consequently, in the label printout, the word "Milk" is to be printed using an alternative font, which is shown by the bold character in which "Milk" is printed on the right-hand side of Fig. 4.

As indicated above, and bearing in mind that a specific text table such as an allergy table may include a large amount such as thousands of entries, it may be meaningful to organize the table so as to be subdivided into entries having a common first character, respectively. In that case, each first character of an entry has its own specific address and the table is categorized in accordance with the addresses of the first characters of the words. An example of an allergy table in accordance with such a structure is shown below.

| [Heading character] | [Allergy table] |
|---|---|
| A (Address 1) **→** | Abalone,Apple..... |
| B (Address 2) **→** | Beef,Banana..... |
| C (Address 3) **→** | Crab,Chicken..... |

The first method illustrated in Fig. 4 can in particular be useful for customers who have already had a lot of products and respective text data before the need for highlighting particular text portions with alternative fonts has been introduced. Namely, when employing the above described first method for discriminating the text portions, there is no need to create the data again from the beginning.

It is, however, a drawback of said method that it may require a considerable amount of processing time (and in particular, more time than the second method described below) due to the need for comparing the look-up table (an allergy table) with the input data (user products data). Moreover, although there is no need to change input text data, the look-up table must be permanently kept up to date in order not to omit employing the alternative font for a part of the data, for which it has be used.

The alternative second method for discriminating text portions to be printed in standard and alternative fonts is illustrated in Fig. 5. In accordance with the second method, the data to be printed is somehow marked to indicate which words/groups of words/characters shall use the alternative glyphs. For instance, in the list of ingredients serving as the input text shown in Fig. 5, which basically corresponds to the list that is shown in the right-hand side of Fig. 4, the word "Milk" is marked by putting it in angular brackets. In the label printer, some parsing processing, such as through scripting, is performed on the input data, in order to replace, in the marked sub-strings, the standard font glyphs with the alternative ones, i.e. in accordance with the above described preferred embodiment, by adding to each character of the marked sub-strings the fixed number to the code point.

In accordance with the method that has been described, it is also possible to extend the marks so as to distinguish, for instance, between different alternative fonts, such as "bold" and "italics" by highlighting a text in a manner known from mark-up language such as "bold" by <b>bold</b>, or "italics" by <i>italic</i>.

Further alternatively, text to be marked can be marked by pre- and post-fixing a predefined character, for instance the character # (ASCII35).

A respective example, which leads to the output shown in Fig. 2, is as follows:
Mixed Salad (39%) (Iceberg Lettuce, Endive & Radicchio), #Mozzarella# (44%), Tomatoes (17%)

In that case it is predefined that a text portion included between characters of "#" has to be printed in an alternative font having glyphs that are both boldface and in italics. Although in the foregoing detailed description, the invention has been basically described by means of alternative fonts being bold and/or italics by way of example, the present invention is not limited to this. For instance, a single font file in accordance with the present invention can include fonts of both "Arial" (e.g. as a standard font) and "Courier" (e.g. as a (first) alternative font), addressed by adding a predefined offset to the character code points. Further, there may be additional alternative fonts. For instance, in addition to the above, "Times New Roman" may be included as a second alternative font, addressed by adding another predefined offset, larger than the first offset and sufficiently large to avoid any overlap between address areas of code points belonging to different fonts. Also, it is possible to include fonts with different point sizes as alternatives into the font file.

As indicated, time is saved by the second method as compared to the first method, since there is no need for referring to a look-up table (allergy table). Such a method can be particularly advantageous for customers who in any case newly create their products table, or wherein the number of items (ingredients) that may occur in input texts is limited. Further, the method also does not require maintenance of an element of a label printer (look-up table) updated.

While the two above described methods of discriminating text to be printed using different fonts (e.g. a standard font and an alternative font) are generally implemented alternatively, within the framework of the present invention it is also possible to provide a printer that is capable of performing both discrimination methods, if respective information about which method to apply to a particular input text is delivered together with the input text. In particular, such information can be encoded in an input text header, such as a flag indicating to perform either the first or the second discrimination method, which are described above in connection with Figs. 4 and 5.

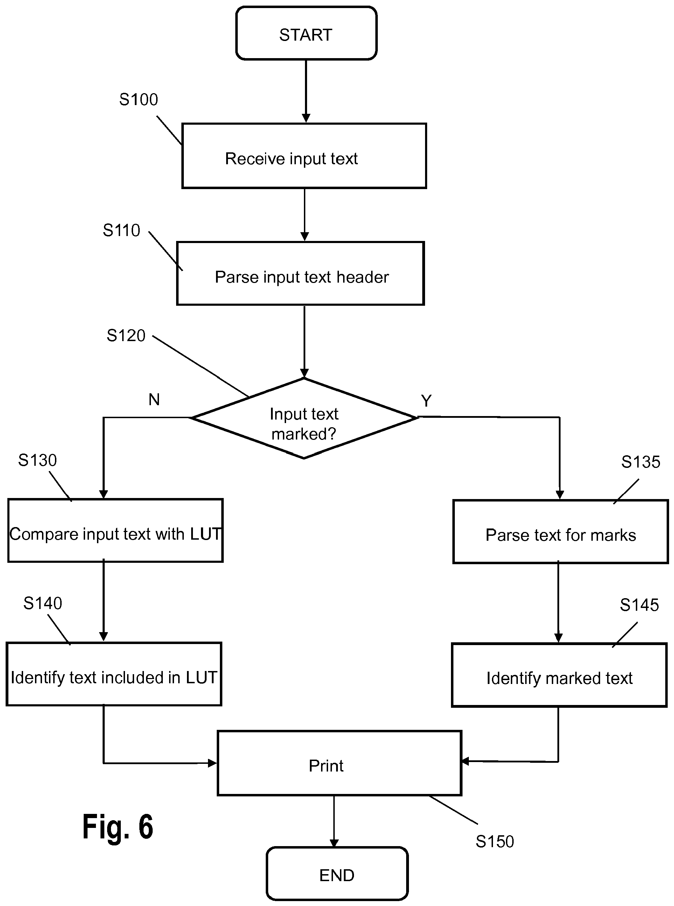

Fig. 6 is a flow chart illustrating an overall processing scheme performed by a label printer which is adapted to perform both discrimination methods depending on the circumstances.

In step S100, an input text is received. The input text includes a header having information encoded therein about which discrimination method of texts to be printed using different font types is encoded. In step S110, the input text header is parsed in order to extract the respective information.

In subsequent step S120, a distinction is made as to whether the discrimination is to be made using pre-set marks in the input text itself (i.e whether such pre-set marks exist in the input text) or not. In the latter case, text portions to be printed using different fonts have to be discriminated by means of reference to a look-up table.

In the case where pre-set marks exist in the input text (S120: Y), the flow proceeds to step S135. In step S135, the text is parsed in order to find the predefined marks indicating those text portions that are to be printed within an alternative font (or one of a plurality of alternative fonts). In subsequent step S145, the respectively marked text portions are identified.

In the contrary case, when there are no marks pre-set in the input text (S120: N), the flow proceeds to step S130. In step S130, the input text is compared, preferably word by word, with the contents listed in a look-up table (specific text table). Thereby, it is discriminated whether the portion of the input text (word) exists in the look-up table or not. Accordingly, in subsequent step S104, those text portions (words) are identified that are included in the look-up table. Those text portions have to be printed using an alternative font in subsequent printing. In both cases, after identification of text to be printed using alternative font types in steps S140 and S145, respectively, the desired text is printed in step S150. In accordance with a preferred embodiment, wherein the single font file including multiple fonts is organized in such a manner that alternative fonts are distinguished from the standard font by adding a fixed number to the respective code points, meaning that depending on whether a text has been identified in preceding steps S140 or S145 or not, either font is selected out of the font file after addition of the respective fixed number, or not. In the latter case, the glyphs of the standard font are applied.

As indicated above, in accordance with the present invention, a label printer may be operable to perform only a single one of the above methods,
In this case, processing in accordance with Fig. 6 reduces to either only steps S130, S140 and S150, or S135, S145 and S150.

On the other hand, a method as illustrated and described with reference to Fig. 6 or individual steps and parts thereof can also be applied in connection with other methods of printing text portions of an input text using different fonts, than the one using multiple fonts in a single font file, as defined by the present invention.

The present invention is defined by the appended claims and not limited to the particular embodiments as described above with reference to the appended drawings, which are given for improving the understanding of the principles underlying the present invention and by way of example only.

Moreover, particular features of embodiments described so far can be combined, as long as such a combination does not lead to any contradiction in itself or to a contradiction to the appended claims.

In summary, the present invention relates to a label printer which is capable of printing text employing several fonts in a single text field. For this purpose, a single font file is prepared and used, which includes the glyphs for plural font types. Thereby it is possible to print using different fonts in a single text field, although a command language as common in label printers such as SBPL (Sato Barcode Program Language) can designate only a single font file in one command. The present invention is particularly applicable for allergy indication in listing of food ingredients, as requested in some jurisdictions.

## Claims

1. A label printer for printing text on a label (312), the label printer including
a discriminating section for discriminating a text portion of input text to be printed using a first font type and at least a text portion of the input text to be printed using a second font type; and
a printing section for printing, respectively, according to the discrimination result of said discrimination section, into a single text field;
**characterized in that**
the label printer using a command language that can designate only a single font file in one command, that is for printing in one text field,
the label printer further including a font file comprising glyphs for fonts of at least two different types;
the printing section is configured to print the input text using the glyphs of the first and the second font type by referring to said font file;
said at least two different font types include a standard font and at least one alternative font; and
a glyph for printing a character in said alternative font in said font file can be identified by adding a fixed offset number to an identifier of a glyph of the respective character in said standard font in said font file.

2. A label printer according to claim 1, further comprising a specific text table listing specific portions of text that have to be printed using glyphs of the alternative font type when occurring in an input text.

3. A label printer according to claim 2, wherein said discriminating section is operable to discriminate text portions that have to be printed using the standard font and text portions that have to be printed using the alternative font by comparing the text portions of an input text with the text portions listed in said specific text table.

4. A label printer according to claim 2 or 3, wherein said specific text table is organized such that text portions are categorized in accordance with the first characters of the text portions, such that each first character has its own address.

5. A label printer according to claim 1, wherein, in the input text to be printed, text portions that have to be printed using the glyphs of said alternative font type are marked in advance.

6. A label printer according to any of claims 1 to 5, further comprising an RFID encoder for encoding an RFID tag printed on the label (312) during the printing process, wherein the RFID tag is encoded so as to provide label information that can be made audible related to the text portion that is printed using said alternative font type.

7. A label printer according to any of claims 1 to 6, capable of printing by means of two-color-thermal transfer technology, wherein text portions printed using different font types are printed in different colors.

8. A method of operating a label printer (108) for printing text on a label (312), the method comprising the steps of
discriminating (S130, S140; S135, S145) a text portion of input text to be printed using a first font type and at least a text portion of the input text to be printed using a second font type; and
printing (S150) the input text in a single text field using the glyphs of the first and the second font type, respectively, according to the discrimination result;
**characterized in that**
the label printer (108) using a command language that can designate only a single font file in one command, that is for printing in one text field,
the label printer (108) including a font file comprising glyphs for fonts of at least two different types;
said printing step (S150) printing the input text using the glyphs of the first and the second font type by referring to said font file;
said at least two different font types include a standard font and at least one alternative font; and
a glyph for printing a character in said alternative font in said font file is identified by adding a fixed offset number to an identifier of a glyph of the respective character in said standard font in said font file.

## Patentansprüche

1. Etikettendrucker zum Drucken vom Text auf ein Etikett (312), wobei der Etikettendrucker enthält
einen Unterscheidungsabschnitt zum Unterscheiden eines Textteils eingebebenen Texts, der unter Verwendung eines ersten Fonttyps zu drucken ist und wenigstens eines Textteils des angegebenen Texts, der unter Verwendung eines zweiten Fonttyps zu drucken ist; und
einen Druckabschnitt zum Drucken in ein einziges Textfeld, jeweils gemäß dem Unterscheidungsergebnis des Unterscheidungsabschnitts,
**dadurch gekennzeichnet, dass**
der Etikettendrucker eine Kommandosprache benutzt die nur eine einzige Fontdatei in einem Kommando, das heißt zum Drucken in ein Textfeld, bezeichnen kann,
der Etikettendrucker weiterhin eine Fontdatei enthält, die Glyphen für Fonts von wenigstens zwei verschiedenen Typen umfasst,
der Druckabschnitt eingerichtet ist, den eingegebenen Text unter Verwendung der Glyphen des ersten und des zweiten Fonttyps durch Bezugnahme auf die Fontdatei zu drucken;
die wenigstens zwei verschiedenen Fonttypen einen Standardfont und wenigstens einen alternativen Font einschließen; und
eine Glyphe zum Drucken eines Zeichens in dem alternativen Font in der Fontdatei durch Addieren einer festen Versatzzahl zu einem Identifikator einer Glyphe des betreffenden Zeichens in dem Standardfont in der Fontdatei identifiziert werden kann.

2. Etikettendrucker nach Anspruch 1, weiterhin umfassend eine Tabelle für spezifischen Text, die spezielle Textteile auflistet, die unter Verwendung von Glyphen des alternativen Fonts zu drucken sind, wenn sie in einem eingegebenen Text auftreten.

3. Etikettendrucker nach Anspruch 2, wobei der Unterscheidungsabschnitt betrieben werden kann, um Textteile, die unter Verwendung des Standardfonts zu drucken sind und Textteile, die unter Verwendung des alternativen Fonts zu drucken sind, zu unterscheiden, indem die Textteile eines angegebenen Texts mit den in der Tabelle für spezifischen Text aufgelisteten Textteilen verglichen werden.

4. Etikettendrucker nach Anspruch 2 oder 3, wobei die Tabelle für spezifischen Text so organisiert ist, dass Textteile gemäß den ersten Zeichen der Textteile kategorisiert werden, so dass jedes erste Zeichen seine eigene Adresse hat.

5. Etikettendrucker nach Anspruch 1, wobei in dem zu druckenden eingegebenen Text, Textteile, die unter Verwendung der Glyphen des alternativen Fonts zu drucken sind, vorab markiert werden.

6. Etikettendrucker nach einem der Ansprüche 1 bis 5, weiterhin umfassend einen RFID-Codierer zum Codieren eines auf das Etikett (312) gedruckten RFID-Tags während des Druckvorgangs wobei das RFID-Tag so codiert wird, dass es Etiketteninformation bereitstellt, die hörbar gemacht werden kann und sich auf den Textteil bezieht, der unter Verwendung des alternativen Fonttyps gedruckt wird.

7. Etikettendrucker nach einem der Ansprüche 1 bis 6, der in der Lage ist, mit Hilfe von Zweifarb-Thermotransfertechnologie zu drucken, wobei Textteile, die unter Verwendung unterschiedlicher Fonttypen gedruckt werden, in unterschiedlichen Farben gedruckt werden.

8. Verfahren zum Betreiben eines Etikettendruckers (108) zum Drucken eines Textes auf ein Etikett (312), wobei das Verfahren die Schritte umfasst:
Unterscheiden (S130, S140; S135, S145) eines Textteils eingebebenen Texts, der unter Verwendung eines ersten Fonttyps zu drucken ist und wenigstens eines Textteils des angegebenen Texts, der unter Verwendung eines zweiten Fonttyps zu drucken ist; und Drucken (S150) des eingegebenen Texts in ein einziges Textfeld unter Verwendung der Glyphen des ersten und des zweiten Fonttyps, jeweils gemäß dem Unterscheidungsergebnis;
**dadurch gekennzeichnet, dass**
der Etikettendrucker (108) eine Kommandosprache benutzt die nur eine einzige Fontdatei in einem Kommando, das heißt zum Drucken in ein Textfeld, bezeichnen kann,
der Etikettendrucker (108) eine Fontdatei enthält, die Glyphen für Fonts von wenigstens zwei verschiedenen Typen umfasst;
der Druckschritt (S150) den eingegebenen Text unter Verwendung der Glyphen des ersten und des zweiten Fonttyps durch Bezugnahme auf die Fontdatei druckt;
die wenigstens zwei verschiedenen Fonttypen einen Standardfont und wenigstens einen alternativen Font einschließen; und
eine Glyphe zum Drucken eines Zeichens in dem alternativen Font in der Fontdatei durch Addieren einer festen Versatzzahl zu einem Identifikator einer Glyphe des betreffenden Zeichens in dem Standardfont in der Fontdatei identifiziert wird.

## Revendications

1. Imprimante d'étiquette destinée à imprimer du texte sur une étiquette (312), l'imprimante d'étiquette incluant :
une section de différenciation destinée à différencier une partie de texte constituée de texte entré à imprimer en utilisant un premier type de police et au moins une partie de texte appartenant au texte entré à imprimer en utilisant un second type de police, et
une section d'impression destinée à imprimer respectivement dans un seul champ de texte, en fonction du résultat de différenciation de ladite section de différenciation,
**caractérisée en ce que :**
l'imprimante d'étiquette utilise un langage d'instructions qui peut ne désigner qu'un seul fichier de police dans une instruction, qui est destinée à imprimer dans un seul champ de texte,
l'imprimante d'étiquette inclut en outre un fichier de polices comprenant des glyphes pour des polices d'au moins deux types différents,
la section d'impression est configurée pour imprimer le texte entré en utilisant les glyphes du premier et du second type de police en faisant référence au dit fichier de polices,
lesdits deux types différents de polices ou plus incluent une police standard et au moins une police alternative, et
un glyphe destiné à imprimer un caractère dans ladite police alternative dudit fichier de polices peut être identifié en ajoutant un numéro de décalage fixe à un identificateur d'un glyphe du caractère respectif dans ladite police standard dudit fichier de polices.

2. Imprimante d'étiquette selon la revendication 1, comprenant en outre un tableau de texte énumérant des parties spécifiques de texte qui doivent être imprimées en utilisant des glyphes du type de police alternative lorsqu'elles apparaissent dans un texte entré.

3. Imprimante d'étiquette selon la revendication 2, dans laquelle ladite section de différenciation peut être mise en œuvre pour différencier des parties de texte qui doivent être imprimées en utilisant la police standard et des parties de texte qui doivent être imprimées en utilisant la police alternative en comparant les parties de texte d'un texte entré aux parties de texte énumérées dans ledit tableau de texte spécifique.

4. Imprimante d'étiquette selon la revendication 2 ou la revendication 3, dans laquelle ledit tableau de texte spécifique est organisé de sorte à ce que des parties de texte soient réparties en fonction des premiers caractères des parties de texte, de telle sorte que chaque premier caractère possède sa propre adresse.

5. Imprimante d'étiquette selon la revendication 1, dans laquelle, dans le texte entré à imprimer, des parties de texte qui doivent être imprimées en utilisant les glyphes dudit type de police alternative sont marquées à l'avance.

6. Imprimante d'étiquette selon l'une quelconque des revendications 1 à 5, comprenant en outre un codeur RFID destiné à coder une étiquette RFID imprimée sur l'étiquette (312) pendant le processus d'impression, l'étiquette RFID étant codée de sorte à fournir des informations d'étiquette qui peuvent être rendues audibles se rapportant à la partie de texte qui est imprimée en utilisant ledit type de police alternative.

7. Imprimante d'étiquette selon l'une quelconque des revendications 1 à 6, pouvant imprimer au moyen d'une technologie de transfert thermique à deux couleurs, où des parties de texte utilisant des types de polices différentes sont imprimées dans des couleurs différentes.

8. Procédé de mise en œuvre d'une imprimante d'étiquette (108) destinée à imprimer un texte sur une étiquette (312), le procédé comprenant les étapes suivantes :
la différenciation (S130, S140 ; S135, S145) d'une partie de texte constituée de texte entré à imprimer en utilisant un premier type de police et au moins une partie de texte appartenant au texte entré à imprimer en utilisant un second type de police, et
l'impression (S150) du texte entré dans un seul champ de texte en utilisant respectivement les glyphes du premier et du second type de police, en fonction du résultat de différenciation,
**caractérisé en ce que :**
l'imprimante d'étiquette (108) utilise un langage d'instructions qui peut ne désigner qu'un seul fichier de police dans une instruction, qui est destinée à imprimer dans un seul champ de texte,
l'imprimante d'étiquette (108) inclut un fichier de polices comprenant des glyphes pour des polices d'au moins deux types différents,
ladite étape d'impression (S150) imprime le texte entré en utilisant les glyphes du premier et du second type de police en faisant référence au dit fichier de polices,
lesdits deux types différents de polices ou plus incluent une police standard et au moins une police alternative, et
un glyphe destiné à imprimer un caractère dans ladite police alternative dudit fichier de polices peut être identifié en ajoutant un numéro de décalage fixe à un identificateur d'un glyphe du caractère respectif dans ladite police standard dudit fichier de polices.
